# EUROPÄISCHE PATENTSCHRIFT

(11) **EP 3 450 834 B1**
(45) Veröffentlichungstag und Bekanntmachung des Hinweises auf die Patenterteilung: **06.09.2023**
(21) Anmeldenummer: 18186236.8
(22) Anmeldetag: 30.07.2018
(51) Int. Cl.: F21S 43/237, F21S 43/239, F21S 43/243, F21S 43/249, F21S 43/247, F21S 43/27, F21S 43/14, B60Q 1/00, F21S 43/50, G02B 6/36, B60Q 1/26, F21S 43/20, F21V 8/00, F21S 43/245

(54) **BELEUCHTUNGS- UND/ODER SIGNALISIERUNGSVORRICHTUNG FÜR EIN KRAFTFAHRZEUG**
LIGHTING AND/OR SIGNALLING DEVICE FOR A MOTOR VEHICLE
DISPOSITIF D'ÉCLAIRAGE ET / OU DE SIGNALISATION POUR UN VÉHICULE AUTOMOBILE

(30) Priorität: 29.08.2017 AT 507182017
(43) Veröffentlichungstag der Anmeldung: 06.03.2019
(73) Patentinhaber: ZKW Group GmbH, 3250 Wieselburg (AT)
(72) Erfinder: Danner, Laura, 3362 Mauer b. Amstetten (AT); Eichinger, Bernd, 3375 Krummnussbaum (AT); Ziervogl, Lukas, 3361 Aschbach Markt (AT); Berger, Martin, 3661 Artstetten (AT)
(74) Vertreter: Patentanwaltskanzlei Matschnig & Forsthuber OG

(56) Entgegenhaltungen:
- EP-A1- 2 607 777
- EP-A1- 3 190 332
- EP-A1- 3 190 333
- EP-A2- 2 194 311
- WO-A1-2016/070210
- DE-A1-102004 054 732
- DE-A1-102007 005 551
- DE-A1-102007 010 023
- DE-A1-102010 006 348
- DE-A1-102012 017 596
- DE-B4-102004 054 732
- DE-B4-102007 010 023
- FR-A1- 3 014 787
- US-A1- 2014 160 778
- US-A1- 2015 277 027

## Beschreibung

Die Erfindung betrifft eine Beleuchtungs- und/oder Signalisierungsvorrichtung für ein Kraftfahrzeug.

Weiters betrifft die Erfindung einen Kraftfahrzeugscheinwerfer, welcher zumindest eine erfindungsgemäße Beleuchtungs- und/oder Signalisierungsvorrichtung umfasst.

Da Elektrofahrzeuge, insbesondere elektrisch betriebene Kraftfahrzeuge, immer weitere Verbreitung finden, kann eine Information über den Zustand der noch verbleibenden elektrischen Energie eines solchen Kraftfahrzeuges von Bedeutung sein.

Dies kann mit einfachen Mitteln auf einer Armaturenanzeige realisiert werden, wobei auch eine eigene Beleuchtungs- und/oder Signalisierungsvorrichtung, welche außerhalb des Fahrzeugs angeordnet sein kann, möglich ist.

Aus dem Stand der Technik beschreibt unter anderem die DE 10 2011121 058 A1 eine Anzeige über einen Energiespeicher eines Fahrzeugs, welche Anzeige mit Leuchtmitteln des Fahrzeugs dargestellt wird, wobei mit denselben Leuchtmitteln eine Lichtfunktion des Fahrzeugs realisiert werden, welche keinen Bezug zu dem Energiespeicher aufweist.

Aus der DE 10 2007 005 551 A1 ist eine Leuchte bekannt, wobei diese Leuchte ein Gehäuse und eine Lichtscheibe, hinter der ein Leuchtmittel vorgesehen ist, aufweist, und wobei die Lichtscheibe in mindestens zwei getrennte lichtdurchlässige und mit Abstand voneinander angeordnete Lichtfenster aufgeteilt ist, die gleiche oder unterschiedliche Leuchtfunktionen haben. Zwischen diesen Lichtfenstern ist ein wenigstens teilweise lichtundurchlässiger Bereich vorhanden, wobei im lichtundurchlässigen Bereich wenigstens ein zusätzlicher lichtdurchlässiger Bereich vorgesehen ist, um ein von dem Gesetzgeber gefordertes zusammenhängendes Lichtfenster umzusetzen, wenn die beiden Lichtfenster die gleiche Lichtfunktion erfüllen. Dokument US 2014/0160778 A1 offenbart eine Beleuchtungs- und/oder Signalisierungsvorrichtung für ein KFZ, welche Vorrichtung aus zwei, einzeln ansteuerbaren Lichtleitern besteht und die Lichtleiter als einstückiges Lichtleiterelement ausgebildet sind. Dokument US 2015/0277027 A1 offenbart ein weitere aus dem Stand der Technik bekannte Beleuchtungs- und/oder Signalisierungsvorrichtung für ein KFZ

Es ist Aufgabe der Erfindung eine verbesserte Beleuchtungs- und/oder Signalisierungsvorrichtung bereitzustellen.

Diese Aufgabe wird mit den Merkmalen von Anspruch 1 gelöst.

Dadurch wird eine Montagezeitverkürzung sowie eine Kostenreduktion ermöglicht.

Eine solche Beleuchtungs- und/oder Signalisierungsvorrichtung kann beispielsweise zur Erzeugung einer Blinklichtverteilung bzw. Blinklichtfuntion, einer Abblendlichtverteilung und/oder als Ladestandsanzeige eines Fahrzeuges, insbesondere eines Elektrokraftfahrzeuges, vorgesehen sein.

Mit Vorteil ist vorgesehen, wenn die Lichtleiter und der zumindest eine Verbindungssteg aus einem Werkstoff, vorzugsweise mittels Einkomponenten-Spritzgießverfahren hergestellt, gebildet sind.

Vorteilhafterweise kann der zumindest eine Verbindungssteg im Wesentlichen im Bereich der jeweiligen Zuleitungsabschnitte und Lichteinkoppelstellen der Lichtleiter oder am Lichtleiterende der jeweiligen Lichtleiter angeordnet sein.

Bei einer beispielhaften Ausführungsform kann vorgesehen sein, dass Vorrichtung ferner zumindest eine teilweise lichtdurchlässige Lichtscheibe umfasst, welche in Lichtaustrittsrichtung nach den Lichtleitern angeordnet ist, wobei die Lichtscheibe zumindest zwei durch einen opaken Bereich voneinander getrennte, zumindest teilweise lichtdurchlässige Bereiche - im weiteren Verlauf Lichtfenster genannt - aufweist, welche jeweils zumindest einem der zumindest zwei Lichtleiter zugeordnet sind und deren Anordnung in Bezug auf die jeweiligen Lichtleiter eine zweite Lichtverteilung des aus dem Lichtaustrittsbereich austretenden Lichts ermöglicht.

Mit "zumindest teilweise lichtdurchlässig" ist gemeint, dass die Lichtfenster einen Transmissionsgrad kleiner 1 aufweisen und dadurch das von dem Lichtleiter austretende Licht abschwächen bzw. in Hinblick auf den Transmissionsgrad abschwächen - gleiches gilt für "zumindest teilweises Durchstrahlen".

So hätte ein komplett lichtundurchlässiges bzw. opakes Medium einen Transmissionsgrad gleich Null bzw. im Wesentlichen gleich Null.

Hingegen besitzen Medien, welche die Intensität des transmittierten Lichts unverändert lassen, einen Transmissionsgrad gleich Eins bzw. im Wesentlichen gleich Eins.

Damit ist vor allem gemeint, dass die Lichtquellen, welche den jeweiligen Lichtleitern zugeordnet sind, unabhängig voneinander ansteuerbar sind, um ein Lauflicht und/oder eine Ladezustandsanzeige zu realisieren.

Hierbei können die Lichtquellen auch dimmbar sein.

Weiterhin kann es günstig sein, wenn die Lichtscheibe einstückig in einem Zweikomponenten-Spritzgießverfahren hergestellt wurde.

Dadurch wird eine reale Montagezeitverkürzung der Beleuchtungs- und/oder Signalisierungsvorrichtung ermöglicht.

Ebenso wird durch die Reduktion der einzelnen Bauteile eine Kostenverminderung ermöglicht.

Überdies wurden bei Rütteltests keine Abriebe zwischen den Lichtfenstern und den opaken Bereichen aufgrund der durch das Zweikomponenten-Spritzgießverfahren einstückig hergestellten Lichtscheibe festgestellt.

Bei einer zweckmäßigen Ausgestaltung kann vorgesehen sein, dass sich die jeweiligen Lichtfenster der Lichtscheibe bis einschließlich dem Bereich der Lichteinkoppelstelle und des Zuleitungsabschnittes des jeweiligen Lichtleiters erstrecken.

Es kann vorgesehen sein, dass zwischen nächst benachbarten Lichtleitern zumindest eine Trennwand angeordnet ist, um ein Übersprechen von emittiertem Licht eines Lichtleiters in einen nächst benachbarten Lichtleiter zu verhindern.

Bei einer weitere Ausführungsform kann vorgesehen sein, dass das Lichtleiterelement in einem Tragerahmen, welcher Ausnehmungen für die entsprechenden Lichtleiter des Lichtleiterelements aufweist, angeordnet ist, wobei die Ausnehmungen der jeweiligen Lichtleiter des Lichtleiterelements ein Durchstrahlen und/oder Übersprechen von emittiertem Licht eines Lichtleiters in einen nächst benachbarten Lichtleiter verhindern.

Ferner kann vorgesehen sein, dass zwischen nächst benachbarten Lichtfenstern zumindest eine Trennwand angeordnet ist, welche ermöglicht, ein Übersprechen eines von einem Lichtleiter emittierten Lichts in ein diesem Lichtleiter nicht zugeordnetes Lichtfenster zu verhindern.

Es kann vorteilhaft sein, wenn die Lichtfenster eine variierende Wandstärke aufweisen.

Dabei kann es günstig sein, wenn die Lichtfenster einen Wandstärkenverlauf aufweisen, wobei die Wandstärke in Richtung Lichtleiterende des jeweiligen Lichtleiters abnimmt.

Ebenso kann es günstig sein, wenn die Lichtfenster einen Wandstärkenverlauf aufweisen, wobei die Wandstärke in Richtung Lichtleiterende des jeweiligen Lichtleiters zunimmt.

Eine praxisgerechte Weiterentwicklung der Erfindung kann vorsehen, dass die Auskoppelelemente im Auskoppelabschnitt der jeweiligen Lichtleiter des Lichtleiterelements als Prismen ausgebildet sind.

Dabei kann vorgesehen sein, dass die Auskoppelelemente im Auskoppelabschnitte der jeweiligen Lichtleiter einen Größen- und/oder Abstandsverlauf aufweisen.

In einer weiteren praxisgerechten Ausführungsform der Erfindung kann vorgesehen sein, dass im Zuleitungsabschnitt der jeweiligen Lichtleiter Auskoppelelemente angeordnet sind, um ein Austreten des von der zumindest einen Lichtquelle eingespeisten Lichts abseits des Auskoppelabschnitts zu ermöglichen.

Mit Vorteil kann hierbei vorgesehen sein, dass die Auskoppelelemente im Zuleitungsabschnitt der jeweiligen Lichtleiter als zylindrisch geformte Rillen ausgebildet sind.

Vorteilhafterweise kann die Größe bzw. können die Dimensionen der Auskoppelelemente im Zuleitungsabschnitt der jeweiligen Lichtleiter entlang des jeweiligen Lichtleiters in Richtung Lichtleiterende zu- oder abnehmen.

Weiters kann es vorteilhaft sein, wenn die zumindest eine Lichtquelle der jeweiligen Lichtleiter als LED ausgebildet ist.

Es sei darauf hingewiesen, dass die zumindest eine Lichtquelle auch mehrere LEDs umfassen kann, wobei diese LEDs unabhängig voneinander ansteuerbar und/oder dimmbar sein können.

Es kann günstig sein, wenn die Lichtleiter voneinander unabhängig ansteuerbar sind.

Ebenso kann es günstig sein, wenn die Lichtquellen unabhängig voneinander dimmbar sind.

Bei einer vorteilhaften Variante kann im Bereich der Lichteinkoppelstelle und des Zuleitungsabschnitts ein Blenden-Bauteil mit Blendenabschnitten angeordnet sein, wobei die Blendenabschnitte teilweise lichtdurchlässig ausgebildet sind und je zumindest einem Lichtleiter zugeordnet sind.

Es kann zweckmäßig sein, wenn die Blendenabschnitte einen Wandstärkenverlauf in Richtung Lichtleiterende aufweist, wobei die Wandstärke in Richtung Lichtleiterende zu- oder abnimmt.

Weiters kann es vorteilhaft sein, wenn das Blenden-Bauteil zwischen nächst benachbarten Blendenabschnitten zumindest eine Trennwand aufweist, um ein Durchstrahlen und/oder Übersprechen von emittiertem Licht im Bereich der Lichteinkoppelstelle und des Zuleitungsabschnitts eines Lichtleiters in einen nächst benachbarten Lichtleiter zu verhindern.

Nachfolgend wird die Erfindung anhand von Zeichnungen näher erläutert. Hierbei zeigt:
Fig. 1 eine Explosionsansicht einer beispielhaften Beleuchtungs- und/oder Signalisierungsvorrichtung nach der Erfindung,
Fig. 2 ein beispielhaftes Lichtleiterelement,
Fig. 3 und 4 jeweils eine Detailansicht eines beispielhaften Verbindungssteges des Lichtleiterelements aus Fig. 2,
Fig. 5 einen Tragerahmen für das Lichtleiterelement,
Fig. 6 ein beispielhaftes Blenden-Bauteil,
Fig. 7 einen exemplarischen Lichtleiter mit einem Zuleitungs- und einem Auskoppelabschnitt, und
Fig. 8 eine Detailansicht des Lichtleiters aus Fig. 7.

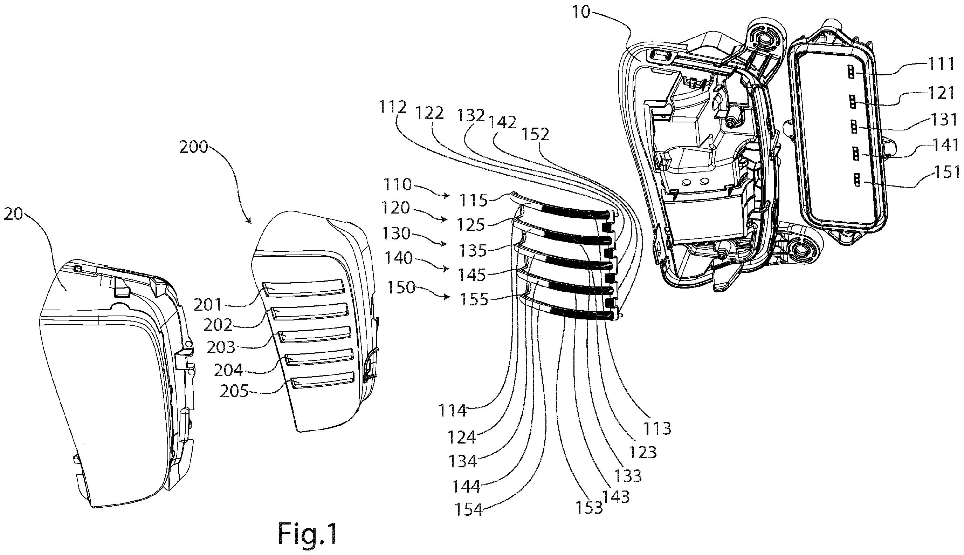

**Fig. 1** zeigt eine beispielhafte Ausführungsform einer erfindungsgemäßen Vorrichtung, umfassend fünf Lichtleiter **110, 120, 130, 140, 150,** mit je einer Lichteinkoppelstelle **112, 122, 132,142,152,** einem Auskoppelabschnitt **114, 124, 134, 144, 154** und einem Lichtleiterende **115,125,135,145,155** sowie eine den jeweiligen Lichtleitern **110,120,130,140,150,** zugeordnete Lichtquelle **111, 121, 131, 141, 151,** welche Licht in den jeweiligen Lichtleiter **110, 120, 130, 140, 150** über die Lichteinkoppelstelle **112, 122, 132, 142, 152** und einem nachfolgenden Zuleitungsabschnitt **113, 123, 133, 143, 153** einspeisen kann und in dem Beispiel aus **Fig. 1** als LED ausgeführt ist und unabhängig voneinander ansteuerbar und/oder dimmbar sein können, wobei in den Lichtleitern **110, 120, 130, 140, 150** eingespeistes Licht mittels im Auskoppelabschnitt **114, 124, 134, 144, 154** angeordnete Auskoppelelemente **161** über einen Lichtaustrittsbereich austritt.

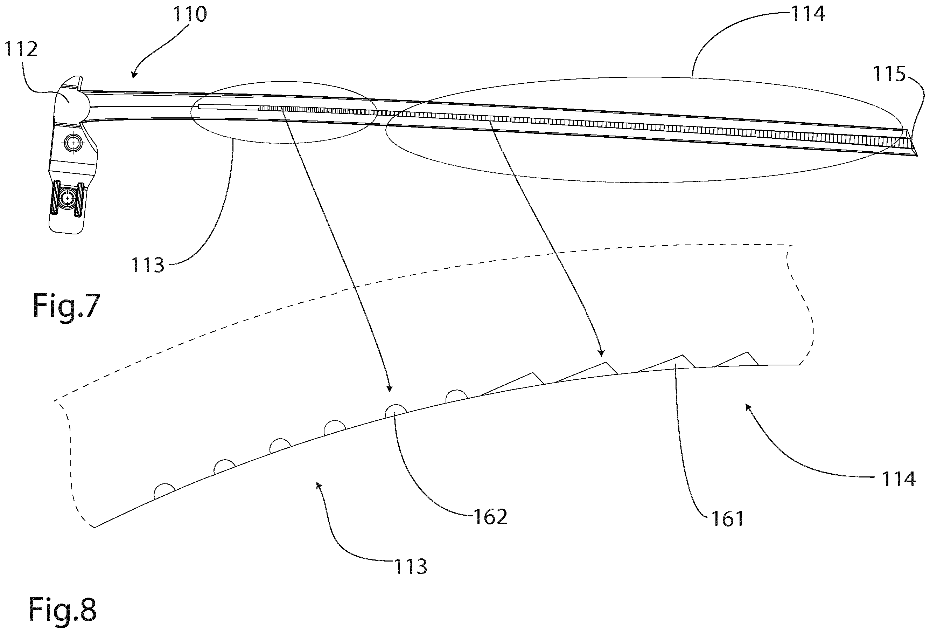

Die Auskoppelelemente **161** der Auskoppelabschnitte **114, 124, 134, 144, 154** erstrecken sich in dem in den Figuren gezeigten Beispiel über den gesamten Auskoppelabschnitt **114,124, 134,144,154** bis zum jeweiligen Lichtleiterende **115, 125, 135, 145, 155,** wie exemplarisch in **Fig.** 7 an einem Lichtleiter **110** gezeigt ist, wobei eine sich nicht über den gesamten Auskoppelabschnitt **115,125,135,145,155** erstreckende Anordnung der Auskoppelelemente **161** denkbar ist.

Ferner können die Auskoppelelemente **161** der Auskoppelabschnitte **114, 124, 134, 144, 154** als Prismen ausgebildet sein, wie in **Fig. 8** zu sehen ist.

Weiters ist in **Fig. 1** eine in Richtung des von den Lichtleitern **110,120,130,140,150** emittierten Lichts - in weiterer Folge Lichtaustrittsrichtung genannt - nachgeschaltete Lichtscheibe **200** mit fünf durch einen opaken Bereich voneinander getrennte, teilweise lichtdurchlässige Bereiche - im weiteren Verlauf Lichtfenster **201, 202, 203, 204, 205** genannt, welche jeweils einem der Lichtleiter **110, 120, 130, 140, 150** zugeordnet sind, dargestellt, wobei die Anordnung der Lichtfenster **201, 202, 203, 204, 205** in Bezug auf die jeweiligen Lichtleiter **110, 120, 130, 140, 150** ein zumindest teilweises Durchstrahlen des aus dem Lichtaustrittsbereich der jeweiligen Lichtleiter **110, 120, 130, 140, 150** austretenden Lichts ermöglicht.

Dieser opake Bereich schließt bei einer flächenhaften Ausbildung der Lichtfenster an diesen flächenerweiternd an, wie die Darstellung der Lichtscheibe **200** in **Fig. 1** zeigt.

Mit "teilweise lichtdurchlässig" ist gemeint, dass die Lichtfenster **201, 202, 203, 204, 205** einen Transmissionsgrad kleiner 1 aufweisen, um das aus dem Lichtleiter **110, 120, 130, 140, 150** bzw. aus dem Zuleitungsabschnitt **113,123,133,143,153** austretende Licht abzuschwächen.

Überdies erstrecken sich die Lichtfenster **201, 202, 203, 204, 205** vorzugsweise von dem Lichtleiterende **115, 125, 135, 145, 155** bis zur Lichteinkoppelstelle **112, 122, 132, 142, 152** des jeweiligen Lichtleiters **110, 120, 130, 140, 150** und überdecken diese im Wesentlichen, d.h. auch die jeweilige Lichteinkoppelstelle **112, 122, 132, 142, 152** wird von einem Lichtfenster **201, 202, 203, 204, 205** derart überdeckt, dass Licht aus der Lichteinkoppelstelle **112, 122, 132, 142,152** bzw. dem nachfolgenden Zuleitungsabschnitt **113, 123, 133, 143, 153** durch das jeweilige Lichtfenster **201, 202, 203, 204, 205** zumindest teilweise durchstrahlen kann.

Des Weiteren kann die Lichtscheibe **200** mit den Lichtfenstern **201, 202, 203, 204, 205**mittels einem Zweikomponenten-Spritzgießverfahren hergestellt werden.

Im Allgemeinen dient der Zuleitungsabschnitt von Lichtleitern zur Durchmischung des Lichts, um ab Beginn des Auskoppelabschnitts bzw. der Lichtaustrittsfläche eines Lichtleiters eine homogene Lichtauskopplung zu erreichen, wobei das Licht aus dem Zuleitungsabschnitt üblicherweise nicht ausgekoppelt wird und deshalb in der Regel keine Auskoppelelemente aufweist. Nichtsdestotrotz kann eine wahrnehmbare Lichtmenge über die Lichteinkoppelstelle und/oder dem Zuleitungsabschnitt austreten und den Leuchteindruck der jeweiligen Lichtfenster **201, 202, 203, 204, 205** beeinflussen, wobei dies einem homogenen Leuchteindruck je Lichtfenster **201, 202, 203, 204, 205** entgegensteht.

Um gezielt Licht aus den Zuleitungsabschnitten **113,123,133,143,153** auszukoppeln und dadurch den einzelnen Lichtfenstern **201, 202, 203, 204, 205** einen homogeneren Leuchteindruck zu verleihen, können Auskoppelelemente **162** im jeweiligen Zuleitungsabschnitt **113,123,133,143,153** angeordnet sein, wie in **Fig. 7** und **8** gezeigt.

Da im Allgemeinen der Zuleitungsabschnitt eines Lichtleiters **201, 202, 203, 204, 205** für eine Durchmischung des eingespeisten Lichts sorgt, sind die Auskoppelelemente **162** im Zuleitungsabschnitt **113,123,133,143,153** der Lichtleiter **110, 120, 130, 140, 150** derart ausgeführt, dass trotz der gezielten Auskoppelung von Licht im Zuleitungsabschnitt **113, 123, 133, 143, 153** die Durchmischung des Lichts nicht maßgeblich beeinflusst wird, sodass das für den Auskoppelabschnitt **114, 124, 134, 144, 154** im Sinne der Durchmischung vorbereitete Licht im Wesentlichen keine maßgeblichen Verluste bzw. Veränderungen erfährt.

Hierfür sind die Auskoppelelemente **162** des Zuleitungsabschnitts **113, 123, 133, 143, 153** in Form von zylindrischen Rillen ausgebildet, da eine solche Form eine weniger stark gerichtete Abstrahlcharakteristik aufweist als ein üblicherweise für die Auskoppelung von Licht verwendete Prismen, die beispielsweise im Auskoppelabschnitt **114,124,134,144,154** des Lichtleiters **110, 120, 130, 140, 150** angeordnet sind, wie exemplarisch in **Fig. 7** und **8** dargestellt.

Wenn die Auskoppelelemente **162** im Zuleitungsabschnitt **113,123,133,143,153** nur über einen kurzen Abschnitt entlang des Zuleitungsabschnitts **113, 123, 133, 143, 153** angeordnet werden, kann der Abstand zwischen den einzelnen Auskoppelelementen **162** und deren Größe bzw. der Radius der zylindrischen Rillen gleich verlaufen.

In diesem Fall kann der Abstand zwischen den einzelnen Auskoppelelementen **162** des Zuleitungsbereichs so gewählt werden, dass er dem Abstand zwischen den einzelnen Auskoppelelementen **161** des Auskoppelabschnitts **114, 124, 134, 144, 154,** beispielsweise der Prismen, entspricht.

Bei einer Auskopplung des Lichts über einen längeren Abschnitt bzw. Bereich des Zuleitungsabschnitts **113, 123, 133, 143, 153,** kann die Größe und/oder der Radius der zylindrischen Rillen **162** sowie die Tiefe der Rillen **162** in dem Zuleitungsabschnitt **113, 123, 133,143,153** verlaufend ausgeführt werden, wobei die Dimensionen wie Größe, Abstand zwischen den einzelnen Rillen, Radius der zylindrischen Rillen und/oder Tiefe entlang des Lichtleiters **110, 120, 130, 140, 150** in Richtung Lichtleiterende **115, 125, 135, 145, 155** zu- oder abnehmend ausgeführt sind.

Für eine verbesserte Homogenisierung des Leuchteindrucks der einzelnen Lichtfenster **201, 202, 203, 204, 205** können die Lichtfenster überdies eine nicht gleichbleibende Wandstärke, vorzugsweise einen Wandstärkenverlauf, aufweisen.

Je nachdem welche Ausformung die Lichtleiter **110, 120, 130, 140, 150** im Bereich der Lichteinkoppelstelle **112, 122, 132, 142, 152** und dem Zuleitungsabschnitt **113,123,133,143, 153** im Bezug zur gewünschten Lichtaustrittsrichtung aufweisen, kann die Wandstärke der Lichtfenster **201, 202, 203, 204, 205** in Richtung Lichtleiterende **115, 125, 135, 145, 155** zu- oder abnehmen.

Falls die Lichtaustrittsrichtung der Lichteinkoppelstelle **112, 122, 132, 142, 152** im Wesentlichen parallel zur gewünschten Lichtaustrittsrichtung des Auskoppelabschnitts **114, 124,134,144,154** der Lichtleiter **110, 120, 130, 140, 150** verläuft, wie in **Fig. 1** gezeigt, so kann es ratsam sein, den Wandstärkenverlauf der Lichtfenster **201, 202, 203, 204, 205** in Richtung Lichtleiterende **115, 125, 135, 145, 155** abnehmend zu gestalten.

Bei einer Lichtaustrittsrichtung der Lichteinkoppelstelle **112, 122, 132, 142, 152,** die im Wesentlichen orthogonal zur gewünschten Lichtaustrittsrichtung des Auskoppelabschnitts **114,124,134,144,154** des Lichtleiters **110, 120, 130, 140, 150** verläuft, kann ein in Richtung Lichtleiterende **115, 125, 135, 145, 155** zunehmender Wandstärkenverlauf der Lichtfenster **201, 202, 203, 204, 205** wünschenswert sein.

Grundsätzlich kann die Wandstärke bzw. der Wandstärkenverlauf der Lichtfenster **201, 202, 203, 204, 205** nach der Lichtstärke der jeweilig verwendeten Lichtleiter **110,120,130,140,150** bzw. der entsprechenden Lichtquellen **111, 121, 131, 141, 151** abgestimmt sein.

Des Weiteren kann zwischen nächst benachbarten Lichtfenstern **201, 202, 203, 204, 205**zumindest eine Trennwand angeordnet sein, welche ermöglicht, ein Übersprechen eines von einem Lichtleiter **110,120,130,140,150** emittierten Lichts in ein diesem Lichtleiter nicht zugeordnetes Lichtfenster **201, 202, 203, 204, 205** zu verhindern.

Dadurch kann der homogene Leuchteindruck der einzelnen Lichtfenster **201, 202, 203, 204, 205** verbessert werden, da ausschließlich Licht des dem jeweiligen Lichtfenster **201, 202, 203, 204, 205** zugeordneten Lichtleiters **110, 120, 130, 140, 150** den maßgeblichen Lichtanteil für einen gewünschten Leuchteindruck bildet.

Um ein Übersprechen von emittierten Licht eines Lichtleiters **110, 120, 130, 140, 150** in einen nächst benachbarten Lichtleiter **110,120,130,140,150** und damit auch ein Übersprechen von Licht eines Lichtleiters in ein diesem Lichtleiter nicht zugeordnetes Lichtfenster **201, 202, 203, 204, 205** über einen nächst benachbarten Lichtleiter zu verhindern, kann zwischen nächst benachbarten Lichtleitern **110, 120, 130, 140, 150** zumindest eine Trennwand angeordnet sein, wobei die zumindest eine Trennwand sowohl ein Übersprechen zwischen benachbarten Lichtfenstern **201, 202, 203, 204, 205** als auch ein Übersprechen zwischen benachbarten Lichtleitern verhindert.

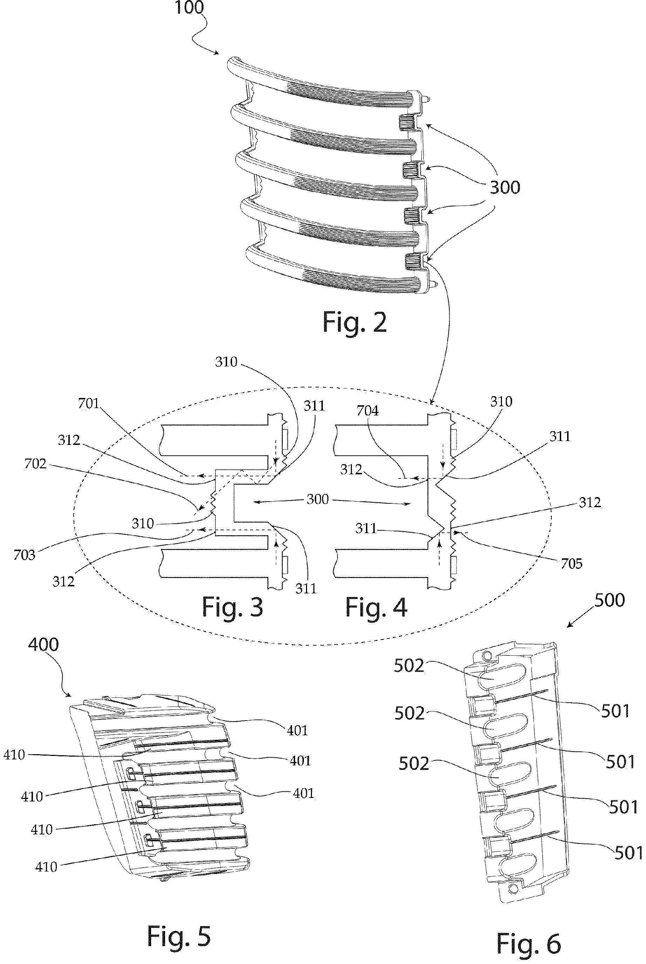

Erfindungsgemäß sind die einzelnen in einer erfindungsgemäßen Beleuchtungs- und/oder Signalisierungsvorrichtung angeordneten Lichtleiter **110, 120, 130, 140, 150** als einstückiges Lichtleiterelement **100** ausgebildet, wie in **Fig. 2** dargestellt, wobei zumindest ein Verbindungssteg **300** zwischen den einzelnen Lichtleitern **110, 120, 130, 140, 150** als Lichtfallenelement mit zumindest einem Auskoppelelement **310, 311, 312** ausgebildet ist, um ein Übertreten von in einem Lichtleiter **110,120,130,140,150** eingekoppeltes bzw. eingespeistes Licht in einen anderen Lichtleiter **110, 120, 130, 140, 150** mittels optischer Totalreflexion zu verhindern, wobei vorzugsweise die Auskoppelelemente **310, 311, 312** Licht direkt nach vorne - in Lichtaustrittsrichtung - auskoppeln.

Die Lichtleiter **110, 120, 130, 140, 150** sowie die Verbindungsstege **300** sind aus einem Werkstoff gebildet, vorzugsweise mittels Einkomponenten-Spritzgießverfahren hergestellt.

Die Verbindungsstege **300** können im Wesentlichen im Bereich der jeweiligen Zuleitungsabschnitte **113, 123, 133, 143, 153** und Lichteinkoppelstellen **112,122,132,142,152** der Lichtleiter **110, 120, 130, 140, 150** angeordnet sein, wie in **Fig. 2** gezeigt.

Eine Detailansicht zweier beispielhafter Verbindungsstege **300** mit Auskoppelelementen **310, 311, 312** ist in **Fig. 3** und **4** gezeigt.

Zu diesen Auskoppelelementen **310, 311, 312** zählen unter anderem definierte Umlenkflächen **311** mit zugeordneten definierten Auskoppelflächen **312,** sowie Prismen **310,** beispielsweise in Form von vorragenden Zacken, die wiederum definierte Auskoppelflächen aufweisen können.

Da grundsätzlich das gesamte Lichtleiterelement **100** bzw. die Verbindungsstege **300** aufgrund des gewählten Materials Umlenkflächen sowie Auskoppelflächen beinhaltet bzw. jede Fläche in Bezug auf einen bestimmten Lichtstrahl unter einem bestimmten Winkel als Umlenkfläche oder Auskoppelfläche dienen kann, sind definierte Umlenkflächen solche Flächen, die bewusst angeordnet werden, um die Richtung einer bestimmten Menge an Lichtstrahlen in Richtung einer dieser definierten Umlenkfläche zugeordneten Auskoppelfläche zu führen bzw. zu lenken, wobei eine definierte Umlenkfläche und die ihr zugeordnete Auskoppelfläche derart angeordnet sind, dass die umgelenkte, bestimmte Menge an Lichtstrahlen orthogonal auf die Auskoppelfläche einfallen, um ein effizientes Auskoppeln zu ermöglichen.

In **Fig. 3** weist der dargestellte, als Lichtfalle ausgebildete Verbindungssteg **300** keine direkte Verbindung im Sinne der kürzest möglichen Verbindungsstrecke zwischen zwei exemplarischen Lichtleitern des Lichtleiterelements **100** auf, sondern ist gewissermaßen als Ausbuchtung geformt.

Aufgrund dieser ausgebuchteten Form ist es möglich - im Vergleich zu einer direkten Verbindung im obigen Sinne - mehr Auskoppelelemente **310, 311, 312** anzuordnen und so die Effizienz der Lichtfalle zu erhöhen.

Weiters weist der Verbindungssteg **300** bzw. die Lichtfalle definierte Umlenkflächen **311** und diesen Umlenkflächen **311** zumindest eine zugeordnete definierte Auskoppelfläche **312** auf, wobei die definierte Umlenkfläche **311** und die zugeordnete Auskoppelfläche **312** 45 Grad zueinander geneigt sein können, sodass Lichtstrahlen, die im 45 Grad Winkel auf die Umlenkfläche **311** einfallen um 90 Grad umgelenkt werden und aus der Auskoppelfläche **312,** die dieser Umlenkfläche **311** zugeordnet ist, auskoppeln können - in dem Beispiel aus **Fig. 3** im Wesentlichen in Lichtaustrittsrichtung der Lichtleiter **110,120,130,140,150,** was durch die beispielhaften, eingezeichneten Strahlengänge **701, 703** dargestellt ist.

Die durch eine solche definierte Umlenkfläche **311** und der ihr zugeordneten Auskoppelfläche **312** nicht ausgekoppelten Lichtstrahlen können sich durch weitere Umlenkungen innerhalb des Verbindungssteges **300** fortbewegen, wobei für diese Zwecke Prismen **310** beispielweise in Form von vorragenden Zacken als weitere Auskoppelelemente angeordnet sind, wie in **Fig. 3** durch einen beispielhaften Strahlengang **702** dargestellt ist.

Es können beispielsweise verschiedene Größen von Prismen **310** an dem Verbindungssteg angeordnet sein.

**Fig. 4** zeigt ein weiteres Beispiel eines Verbindungssteges **300,** der als Lichtfalle ausgebildet ist. Hierbei stellt der Verbindungssteg **300** eine direkte Verbindung im Sinne der kürzest möglichen Verbindungsstrecke zwischen zwei exemplarischen Lichtleitern des Lichtleiterelements **100** dar, wobei in diesem Fall zwei definierte Umlenkflächen **311** in Form von Einkerbungen mit jeweiligen Auskoppelflächen **312** angeordnet sind. Beispielhafte Strahlengänge **704, 705** in **Fig. 4** illustrieren das bereits oben erwähnte Prinzip der Umlenkflächen **311** und den zugehörigen Auskoppelflächen **312.**

Diese definierten Umlenkflächen **311** sind derart angeordnet, dass eine direkte optische Verbindung zwischen nächst benachbarten Lichtleitern innerhalb des Verbindungssteges **300** im Sinne eines geraden Lichtstrahls nicht gegeben ist.

Es sei darauf hingewiesen, dass auch andere Ausformungen der Verbindungsstege **300** bzw. Lichtfallen möglich sind, wobei auch die Anzahl und Wahl der Auskoppelelemente **310, 311, 312** jeweils auf die Geometrie der Verbindungsstege **300** abgestimmt sein können.

Des Weiteren kann zwischen nächst benachbarten Lichtfenstern **201, 202, 203, 204, 205** zumindest eine Trennwand angeordnet sein, welche ermöglicht, ein Übersprechen eines von einem Lichtleiter **110, 120, 130, 140, 150** emittierten Lichts in ein diesem Lichtleiter nicht zugeordnetes Lichtfenster **201, 202, 203, 204, 205** zu verhindern.

Dadurch kann der homogene Leuchteindruck der einzelnen Lichtfenster **201, 202, 203, 204, 205** verbessert werden, da ausschließlich Licht des dem jeweiligen Lichtfenster **201, 202, 203, 204, 205** zugeordneten Lichtleiters **110, 120, 130, 140, 150** den maßgeblichen Lichtanteil für einen gewünschten Leuchteindruck bildet.

Um ein Übersprechen von emittierten Licht eines Lichtleiters **110, 120, 130, 140, 150** in einen nächst benachbarten Lichtleiter **110,120,130,140,150** und damit auch ein Übersprechen von Licht eines Lichtleiters in ein diesem Lichtleiter nicht zugeordnetes Lichtfenster **201, 202, 203, 204, 205** über einen nächst benachbarten Lichtleiter zu verhindern, kann zwischen nächst benachbarten Lichtleitern **110, 120, 130, 140, 150** zumindest eine Trennwand angeordnet sein, wobei die zumindest eine Trennwand sowohl ein Übersprechen zwischen benachbarten Lichtfenstern **201, 202, 203, 204, 205** als auch ein Übersprechen zwischen benachbarten Lichtleitern verhindert.

Eine solche Trennwand kann durch verschiedene Ausführungsformen realisiert werden, wie nachstehend näher beschrieben ist.

Das Lichtleiterelement **100** kann in einem Tragerahmen **400,** welcher Ausnehmungen **401** für die entsprechenden Lichtleiter des Lichtleiterelements **100** aufweist und beispielhaft in **Fig. 5** dargestellt ist, angeordnet sein, wobei die Ausnehmungen **402** der jeweiligen Lichtleiter des Lichtleiterelements **100** derart in dem Tragerahmen **400** ausgeführt sein können, dass zwischen nächst benachbarten Lichtleitern eine Trennwand **410** gebildet ist, wobei die jeweiligen Trennwände **410**ein Durchstrahlen bzw. ein Übersprechen von emittiertem Licht eines Lichtleiters in einen nächst benachbarten Lichtleiter verhindern.

Ferner kann die Lichtscheibe **200** in Bezug auf den Tragerahmen **400** so angeordnet sein, dass die Trennwände **410** des Tragerahmens **400** gleichzeitig auch ein Durchstrahlen bzw. ein Übersprechen von emittiertem Licht eines Lichtleiters **110,120,130,140,150** in ein diesem Lichtleiter **110,120,130,140,150** nicht zugeordnetes Lichtfenster **201, 202, 203, 204, 205, 206** verhindern.

Der Tragerahmen **400** kann jedoch auch dermaßen ausgeführt sein, dass die Zuleitungsabschnitte **113, 123, 133, 143, 153** sowie die Lichteinkoppelstellen **112,122,132, 142,152** nicht in den Ausnehmungen **401** Platz finden, wie beispielsweise der in **Fig. 5** dargestellte Tragerahmen **400,** und somit ein Übersprechen von in einem Lichtleiter **110, 120, 130,140,150** eingekoppeltes bzw. eingespeistes Licht in einen benachbarten Lichtleiter **110, 120,130,140,150** in diesen Bereichen durchaus stattfinden kann.

Zu diesem Zwecke kann vorgesehen sein, dass im Bereich der Zuleitungsabschnitte **113, 123, 133,143,153** sowie den Lichteinkoppelstellen **112,122,132,142,152** oder zumindest in den Bereichen, bei denen keine Ausnehmungen **401** des Tragerahmens **400** für die jeweiligen Lichtleiter **110,120,130,140,150** vorgesehen sind, ein Blenden-Bauteil **500** mit Trennwänden **501** angeordnet ist.

Ein beispielhaftes Blenden-Bauteil ist in **Fig. 6** dargestellt, wobei das Blenden-Bauteil **500** alternative, zumindest teilweise lichtdurchlässige Blendenabschnitte **502** aufweist, welche jeweils einem Lichtleiter **110, 120, 130, 140, 150** zugeordnet sind und einen Wandstärkenverlauf, wie weiter oben beschrieben, aufweisen können.

Es kann auch vorgesehen sein, dass das gesamte Blenden-Bauteil **500** teilweise lichtdurchlässig ausgebildet ist.

Diese mit einem Wandstärkenverlauf ausgebildeten Blendenabschnitte **502** können als Alternative zu den mit einem Wandstärkenverlauf aufweisenden Lichtfenstern **201, 202, 203, 204, 205** eingesetzt werden, um einen homogenen Leuchteindruck je Lichtfenster **201, 202, 203, 204, 205** zu erzielen, wobei auch eine Kombination von Wandstärkenverläufen der Lichtfenster **201, 202, 203, 204, 205** und der Blendenabschnitte **502** denkbar wäre.

Um etwaige Farbeffekte zu erzielen, können die Lichtfenster **201, 202, 203, 204, 205** farbig, entweder einheitlich in einer Farbe oder in jeweils unterschiedliche Farben, ausgestaltet sein.

Gleiches gilt für die Blendenabschnitte **502** des Blenden-Bauteils **500.**

### BEZUGSZEICHENLISTE

| | |
|---|---|
| Gehäuse... | 10 |
| Gehäuseabdeckung... | 20 |
| Lichtleiterelement... | 100 |
| Lichtleiter... | 110,120,130,140,150 |
| Lichtquelle... | 111,121, 131, 141, 151 |
| Lichteinkoppelstelle... | 112,122,132,142,152 |
| Zuleitungsabschnitt... | 113,123,133,143,153 |
| Auskoppelabschnitt... | 114,124,134,144,154 |
| Lichtleiterende... | 115,125,135,145,155 |
| Auskoppelelemente im Auskoppelabschnitt... | 161 |
| Auskoppelelemente im Zuleitungsabschnitt... | 162 |
| Lichtscheibe ... | 200 |
| Lichtfenster ... | 201, 202, 203, 204, 205 |
| Verbindungsstege... | 300 |
| Auskoppelelement Lichtfalle... | 310,311, 312 |
| Prismen... | 310 |
| Umlenkfläche... | 311 |
| Auskoppelfläche... | 312 |
| Tragerahmen... | 400 |
| Ausnehmung... | 401 |
| Trennwände (Tragerahmen)... | 410 |
| Blenden-Bauteil... | 500 |
| Trennwände... | 501 |
| Blendenabschnitt... | 502 |
| Strahlengänge... | 701, 702, 703, 704, 705 |

## Patentansprüche

1. Beleuchtungs- und/oder Signalisierungsvorrichtung für ein Kraftfahrzeug, umfassend, zumindest zwei Lichtleiter (110, 120, 130, 140, 150) mit einer Lichteinkoppelstelle (112, 122, 132, 142, 152) und einem Auskoppelabschnitt (114, 124, 134, 144, 154), sowie zumindest eine den jeweiligen Lichtleitern zugeordnete Lichtquelle (111, 121, 131, 141, 151), welche Licht in die jeweiligen Lichtleiter (110, 120, 130, 140, 150) über die Lichteinkoppelstelle und einem nachfolgenden Zuleitungsabschnitt (113, 123, 133, 143, 153) einspeist, wobei in den Lichtleitern eingespeistes Licht mittels im Auskoppelabschnitt der jeweiligen Lichtleiter angeordnete Auskoppelelemente (161) über einen Lichtaustrittsbereich im Auskoppelabschnitt der jeweiligen Lichtleiter zur Bildung einer ersten Lichtverteilung austritt, wobei die Lichtleiter (110, 120, 130, 140,150) voneinander unabhängig ansteuerbar sind,
wobei die Lichtleiter (110, 120, 130, 140, 150) als einstückiges Lichtleiterelement (100) ausgebildet sind, **dadurch gekennzeichnet, dass**
zumindest ein Verbindungsteg (300) zwischen den einzelnen Lichtleitern als Lichtfallenelement mit zumindest einem Auskoppelelement (310, 311, 312) ausgebildet ist, um ein Übertreten von in einem Lichtleiter eingespeistes Licht in einen anderen Lichtleiter mittels optischer Totalreflexion zu verhindern.

2. Vorrichtung nach Anspruch 1, **dadurch gekennzeichnet, dass** die Lichtleiter (110, 120, 130, 140,150) und der zumindest eine Verbindungssteg (300) aus einem Werkstoff, vorzugsweise mittels Einkomponenten-Spritzgießverfahren hergestellt, gebildet sind.

3. Vorrichtung nach Anspruch 1 oder 2, **dadurch gekennzeichnet, dass** der zumindest eine Verbindungssteg (300) im Wesentlichen im Bereich der jeweiligen Zuleitungsabschnitte (113, 123, 133, 143, 153) und Lichteinkoppelstellen (112, 122, 132, 142, 152) der Lichtleiter oder am Lichtleiterende (115, 125, 135, 145, 155) der jeweiligen Lichtleiter angeordnet ist.

4. Vorrichtung nach einem der Ansprüche 1 bis 3, **dadurch gekennzeichnet, dass** Vorrichtung ferner zumindest eine teilweise lichtdurchlässige Lichtscheibe (200) umfasst, welche in Lichtaustrittsrichtung nach den Lichtleitern (110, 120, 130, 140, 150) angeordnet ist, wobei die Lichtscheibe (200) zumindest zwei durch einen opaken Bereich voneinander getrennte, zumindest teilweise lichtdurchlässige Bereiche - im weiteren Verlauf Lichtfenster (201, 202, 203, 204, 205) genannt - aufweist, welche jeweils zumindest einem der zumindest zwei Lichtleiter (110, 120, 130, 140, 150) zugeordnet sind und deren Anordnung in Bezug auf die jeweiligen Lichtleiter eine zweite Lichtverteilung des aus dem Lichtaustrittsbereich austretenden Lichts ermöglicht, wobei vorzugsweise sich die jeweiligen Lichtfenster (201, 202, 203, 204, 205) der Lichtscheibe (200) bis einschließlich dem Bereich der Lichteinkoppelstelle (112, 122, 132, 142, 152) und des Zuleitungsabschnittes (113, 123, 133, 143,153) des jeweiligen Lichtleiters erstrecken.

5. Vorrichtung nach einem der Ansprüche 1 bis 4, **dadurch gekennzeichnet, dass** zwischen nächst benachbarten Lichtleitern (110, 120, 130, 140, 150) zumindest eine Trennwand angeordnet ist, um ein Übersprechen von emittiertem Licht eines Lichtleiters in einen nächst benachbarten Lichtleiter zu verhindern.

6. Vorrichtung nach einem der Ansprüche 1 bis 5, **dadurch gekennzeichnet, dass** das Lichtleiterelement (100) in einem Tragerahmen (400), welcher Ausnehmungen (401) für die entsprechenden Lichtleiter (110, 120, 130, 140, 150) des Lichtleiterelements (100) aufweist, angeordnet ist, wobei die Ausnehmungen (401) der jeweiligen Lichtleiter des Lichtleiterelements (100) ein Durchstrahlen und/oder Übersprechen von emittiertem Licht eines Lichtleiters in einen nächst benachbarten Lichtleiter verhindern.

7. Vorrichtung nach einem der Ansprüche 4 bis 6, **dadurch gekennzeichnet, dass** zwischen nächst benachbarten Lichtfenstern (201, 202, 203, 204, 205) zumindest eine Trennwand angeordnet ist, welche ermöglicht, ein Übersprechen eines von einem Lichtleiter emittierten Lichts in ein diesem Lichtleiter nicht zugeordnetes Lichtfenster (201, 202, 203, 204, 205) zu verhindern.

8. Vorrichtung nach einem der Ansprüche 4 bis 7, **dadurch gekennzeichnet, dass** die Lichtfenster (201, 202, 203, 204, 205) eine variierende Wandstärke aufweisen, wobei vorzugsweise die Lichtfenster (201, 202, 203, 204, 205) einen Wandstärkenverlauf aufweisen, wobei die Wandstärke in Richtung Lichtleiterende (115, 125, 135, 145, 155) des jeweiligen Lichtleiters zu- oder abnimmt.

9. Vorrichtung nach einem der Ansprüche 1 bis 8, **dadurch gekennzeichnet, dass** die Auskoppelelemente (161) im Auskoppelabschnitt (114, 124, 134, 144, 154) der jeweiligen Lichtleiter einen Größen- und/oder Abstandsverlauf aufweisen.

10. Vorrichtung nach einem der Ansprüche 1 bis 9, **dadurch gekennzeichnet, dass** im Zuleitungsabschnitt (113, 123, 133, 143, 153) der jeweiligen Lichtleiter Auskoppelelemente (162) angeordnet sind, um ein Austreten des von der zumindest einen Lichtquelle (111, 121, 131,141, 151) eingespeisten Lichts abseits der Auskoppelabschnitts zu ermöglichen, wobei vorzugsweise die Auskoppelelemente (162) im Zuleitungsabschnitt (113, 123, 133, 143, 153) der jeweiligen Lichtleiter als zylindrisch geformte Rillen ausgebildet sind, wobei vorzugsweise die Größe bzw. die Dimensionen der Auskoppelelemente (162) im Zuleitungsabschnitt (113, 123, 133, 143, 153) der jeweiligen Lichtleiter entlang des jeweiligen Lichtleiters in Richtung Lichtleiterende (115, 125, 135, 145, 155) zu- oder abnimmt.

11. Vorrichtung nach einem der Ansprüche 1 bis 10, **dadurch gekennzeichnet, dass** die zumindest eine Lichtquelle (111, 121, 131, 141, 151) der jeweiligen Lichtleiter (110, 120, 130, 140, 150) als LED ausgebildet ist.

12. Vorrichtung nach einem der Ansprüche 1 bis 11, **dadurch gekennzeichnet, dass** die Lichtquellen (111, 121, 131, 141, 151) unabhängig voneinander dimmbar sind.

13. Vorrichtung nach Anspruch 1 bis 12, **dadurch gekennzeichnet, dass** die Auskoppelelemente (310, 311, 312) des zumindest einen Verbindungsstegs (300) als Prismen (310) und/oder als definierte Umlenkflächen (311) mit zumindest einer der jeweiligen Umlenkfläche (311) zugeordneten Auskoppelfläche (312) ausgebildet sind.

14. Kraftfahrzeugscheinwerfer, umfassend zumindest eine Beleuchtungs- und/oder Signalisierungsvorrichtung gemäß einem der Ansprüche 1 bis 13.

## Claims

1. Lighting and/or signaling device for a motor vehicle, comprising at least two light guides (110, 120, 130, 140, 150) with a light coupling point (112, 122, 132, 142, 152) and a decoupling section (114, 124, 134, 144, 154), as well as at least one light source (111, 121, 131, 141, 151) which is assigned to the respective light guides and which feeds light into the respective light guides (110, 120, 130, 140, 150) via the light coupling point and a subsequent feed section (113, 123, 133, 143, 153), 150) via the light coupling point and a subsequent feed section (113, 123, 133, 143, 153), wherein light fed into the light guides emerges by means of decoupling elements (161) arranged in the decoupling section of the respective light guides via a light exit region in the decoupling section of the respective light guides in order to form a first light distribution, wherein the light guides (110, 120, 130, 140, 150) can be driven independently of one another,
wherein
the light guides (110, 120, 130, 140, 150) are formed as a one-piece light guide element (100), **characterized in that** at least one connecting web (300) between the individual light guides is formed as a light trap element having at least one decoupling element (310, 311, 312) in order to prevent light fed into one light guide from passing into another light guide by means of total optical reflection.

2. Device according to claim 1, **characterized in that** the light guides (110, 120, 130, 140, 150) and the at least one connecting web (300) are formed from a material, preferably produced by means of a single-component injection molding process.

3. Device according to claim 1 or 2, **characterized in that** the at least one connecting web (300) is arranged essentially in the region of the respective feed sections (113, 123, 133, 143, 153) and light coupling points (112, 122, 132, 142, 152) of the light guides or at the light guide end (115, 125, 135, 145, 155) of the respective light guides.

4. Device according to any one of claims 1 to 3, **characterized in that** device further comprises at least one partially light-transmitting light pane (200) which is arranged downstream of the light guides (110, 120, 130, 140, 150) in the light exit direction, the light pane (200) having at least two at least partially light-transmitting regions - called light windows (201, 202, 203, 204, 205) in the further course - which are separated from one another by an opaque region, which are each associated with at least one of the at least two light guides (110, 120, 130, 140, 150) and the arrangement of which with respect to the respective light guides enables a second light distribution of the light emerging from the light exit region, the respective light windows (201, 202, 203, 204, 205) of the light disk (200) preferably extending up to and including the region of the light coupling point (112, 122, 132, 142, 152) and the feed section (113, 123, 133, 143, 153) of the respective light guide.

5. Device according to any one of claims 1 to 4, **characterized in that** at least one partition is arranged between next adjacent light guides (110, 120, 130, 140, 150) in order to prevent crosstalk of emitted light of one light guide into a next adjacent light guide.

6. Device according to any one of claims 1 to 5, **characterized in that** the light guide element (100) is arranged in a supporting frame (400) having recesses (401) for the respective light guides (110, 120, 130, 140, 150) of the light guide element (100), wherein the recesses (401) of the respective light guides of the light guide element (100) prevent transmission and/or crosstalk of emitted light of a light guide into a next adjacent light guide.

7. Device according to any one of claims 4 to 6, **characterized in that** at least one partition is arranged between next adjacent light windows (201, 202, 203, 204, 205), which partition makes it possible to prevent crosstalk of a light emitted by a light guide into a light window (201, 202, 203, 204, 205) not assigned to this light guide.

8. Device according to any one of claims 4 to 7, **characterized in that** the light windows (201, 202, 203, 204, 205) have a varying wall thickness, preferably the light windows (201, 202, 203, 204, 205) having a wall thickness profile, the wall thickness increasing or decreasing in the direction of the light guide end (115, 125, 135, 145, 155) of the respective light guide.

9. Device according to any one of claims 1 to 8, **characterized in that** the decoupling elements (161) in the decoupling section (114, 124, 134, 144, 154) of the respective light guides have a size and/or distance progression.

10. Device according to any one of claims 1 to 9, **characterized in that** decoupling elements (162) are arranged in the feed section (113, 123, 133, 143, 153) of the respective light guides to allow the light fed in by the at least one light source (111, 121, 131, 141, 151) away from the decoupling section, wherein preferably the decoupling elements (162) in the feed section (113, 123, 133, 143, 153) of the respective light guides are formed as cylindrically shaped grooves, wherein preferably the size resp. dimensions of the decoupling elements (162) in the feed section (113, 123, 133, 143, 153) of the respective light guides increasing or decreasing along the respective light guide in the direction of the light guide end (115, 125, 135, 145, 155).

11. Device according to any one of claims 1 to 10, **characterized in that** the at least one light source (111, 121, 131, 141, 151) of the respective light guides (110, 120, 130, 140, 150) is designed as an LED.

12. Device according to one of claims 1 to 11, **characterized in that** the light sources (111, 121, 131, 141, 151) can be dimmed independently of one another.

13. Device according to claim 1 to 12, **characterized in that** the decoupling elements (310, 311, 312) of the at least one connecting web (300) are formed as prisms (310) and/or as defined deflection surfaces (311) with at least one decoupling surface (312) associated with the respective deflection surface (311).

14. Motor vehicle headlamp, comprising at least one illumination and/or signaling device according to any one of claims 1 to 13.

## Revendications

1. Dispositif d'éclairage et/ou de signalisation pour un véhicule automobile, comprenant au moins deux guides de lumière (110, 120, 130, 140, 150) avec un point de couplage de la lumière (112, 122, 132, 142, 152) et un tronçon de découplage (114, 124, 134, 144, 154), ainsi qu'au moins une source de lumière (111, 121, 131, 141, 151) associée aux guides de lumière respectifs, qui injecte de la lumière dans les guides de lumière respectifs (110, 120, 130, 140, 151), 150) par l'intermédiaire du point de couplage de lumière et d'une section d'alimentation suivante (113, 123, 133, 143, 153), la lumière injectée dans les guides de lumière sortant au moyen d'éléments de découplage (161) disposés dans la section de découplage des guides de lumière respectifs par l'intermédiaire d'une zone de sortie de lumière dans la section de découplage des guides de lumière respectifs pour former une première répartition de lumière, les guides de lumière (110, 120, 130, 140, 150) pouvant être commandés indépendamment les uns des autres,
où
les guides de lumière (110, 120, 130, 140, 150) sont réalisés sous la forme d'un élément de guide de lumière (100) d'une seule pièce, **caractérisé en ce qu'**au moins une barrette de liaison (300) entre les différents guides de lumière est réalisée sous la forme d'un élément de piège à lumière avec au moins un élément de découplage (310, 311, 312), afin d'empêcher un passage de la lumière injectée dans un guide de lumière dans un autre guide de lumière au moyen d'une réflexion optique totale.

2. Dispositif selon la revendication 1, **caractérisé en ce que** les guides de lumière (110, 120, 130, 140, 150) et la au moins une barrette de connexion (300) sont formés d'un matériau, de préférence fabriqué par un procédé de moulage par injection à un composant.

3. Dispositif selon la revendication 1 ou 2, **caractérisé en ce que** l'au moins une barrette de liaison (300) est disposée essentiellement dans la zone des sections d'alimentation respectives (113, 123, 133, 143, 153) et des points de couplage de lumière (112, 122, 132, 142, 152) des guides de lumière ou à l'extrémité (115, 125, 135, 145, 155) des guides de lumière respectifs.

4. Dispositif selon l'une des revendications 1 à 3, **caractérisé en ce que** le dispositif comprend en outre au moins une plaque de lumière (200) partiellement transparente, qui est disposée après les guides de lumière (110, 120, 130, 140, 150) dans la direction de sortie de la lumière, la plaque de lumière (200) présentant au moins deux zones au moins partiellement transparentes, séparées l'une de l'autre par une zone opaque - appelées dans la suite fenêtres de lumière (201, 202, 203, 204, 205), qui sont respectivement associées à au moins l'un des au moins deux guides de lumière (110, 120, 130, 140, 150) et dont la disposition par rapport aux guides de lumière respectifs permet une deuxième répartition de la lumière sortant de la zone de sortie de la lumière, les fenêtres de lumière respectives (201, 202, 203, 204, 205) du disque lumineux (200) s'étendant de préférence jusqu'à la zone du point de couplage de la lumière (112, 122, 132, 142, 152) et de la section d'alimentation (113, 123, 133, 143, 153) du guide de lumière respectif inclus.

5. Dispositif selon l'une des revendications 1 à 4, **caractérisé en ce qu'**au moins une cloison est disposée entre des guides de lumière (110, 120, 130, 140, 150) immédiatement voisins, afin d'empêcher une diaphonie de la lumière émise par un guide de lumière dans un guide de lumière immédiatement voisin.

6. Dispositif selon l'une des revendications 1 à 5, **caractérisé en ce que** l'élément de guide de lumière (100) est disposé dans un cadre de support (400) qui présente des évidements (401) pour les guides de lumière (110, 120, 130, 140, 150) correspondants de l'élément de guide de lumière (100), les évidements (401) des guides de lumière respectifs de l'élément de guide de lumière (100) empêchant un rayonnement et/ou une diaphonie de la lumière émise d'un guide de lumière dans un guide de lumière voisin le plus proche.

7. Dispositif selon l'une des revendications 4 à 6, **caractérisé en ce qu'**entre des fenêtres optiques (201, 202, 203, 204, 205) immédiatement voisines est disposée au moins une cloison permettant d'empêcher une diaphonie d'une lumière émise par un guide optique dans une fenêtre optique (201, 202, 203, 204, 205) non associée à ce guide optique.

8. Dispositif selon l'une des revendications 4 à 7, **caractérisé en ce que** les fenêtres de lumière (201, 202, 203, 204, 205) présentent une épaisseur de paroi variable, de préférence les fenêtres de lumière (201, 202, 203, 204, 205) présentant une courbe d'épaisseur de paroi, l'épaisseur de paroi augmentant ou diminuant en direction de l'extrémité (115, 125, 135, 145, 155) du guide de lumière concerné.

9. Dispositif selon l'une des revendications 1 à 8, **caractérisé en ce que** les éléments de découplage (161) présentent une variation de taille et/ou d'écartement dans la section de découplage (114, 124, 134, 144, 154) des fibres optiques respectives.

10. Dispositif selon l'une des revendications 1 à 9, **caractérisé en ce que** des éléments de découplage (162) sont disposés dans la section d'alimentation (113, 123, 133, 143, 153) des guides de lumière respectifs afin de permettre à la lumière émise par la au moins une source lumineuse (111, 121, 131, 141, 151) à l'écart de la section de découplage, les éléments de découplage (162) dans la section d'alimentation (113, 123, 133, 143, 153) des guides de lumière respectifs étant de préférence réalisés sous la forme de rainures de forme cylindrique, la taille ou les dimensions des éléments de découplage (162) étant de préférence plus grandes que celles des éléments de couplage (161). les dimensions des éléments de découplage (162) dans la section d'alimentation (113, 123, 133, 143, 153) des fibres optiques respectives augmentent ou diminuent le long de la fibre optique respective en direction de l'extrémité (115, 125, 135, 145, 155) de la fibre optique.

11. Dispositif selon l'une des revendications 1 à 10, **caractérisé en ce que** l'au moins une source lumineuse (111, 121, 131, 141, 151) des guides de lumière respectifs (110, 120, 130, 140, 150) est conçue comme une LED.

12. Dispositif selon l'une des revendications 1 à 11, **caractérisé en ce que** les sources lumineuses (111, 121, 131, 141, 151) peuvent être graduées indépendamment les unes des autres.

13. Dispositif selon les revendications 1 à 12, **caractérisé en ce que** les éléments de découplage (310, 311, 312) d'au moins une barrette de liaison (300) sont réalisés sous forme de prismes (310) et/ou de surfaces de renvoi définies (311) avec au moins une surface de découplage (312) associée à la surface de renvoi respective (311).

14. Projecteur de véhicule automobile comprenant au moins un dispositif d'éclairage et/ou de signalisation selon l'une quelconque des revendications 1 à 13.
